# EUROPÄISCHE PATENTSCHRIFT

(11) **EP 1 726 683 B1**
(45) Veröffentlichungstag und Bekanntmachung des Hinweises auf die Patenterteilung: **09.04.2008**
(21) Anmeldenummer: 05011287.9
(22) Anmeldetag: 25.05.2005
(51) Int. Cl.: C23C 18/16, B01D 61/24, B01D 61/32, C25D 21/22

(54) **Verfahren und Vorrichtung zur Einstellung der Ionenkonzentration in Elektrolyten**
Method and apparatus for adjusting the ion concentration of an electrolytic solution
Procédé et appareil pour ajuster la concentration d'ions d'un électrolyte

(43) Veröffentlichungstag der Anmeldung: 29.11.2006
(73) Patentinhaber: Enthone Inc., West Haven, Connecticut 06516 (US)
(72) Erfinder: Koenig Axel, Prof.,Dr., 91074 (DE); Möbius Andreas, Prof.,Dr., 41564 Kaarst (DE); Stark, Franz-Josef, 53909 Zülpich (DE)
(74) Vertreter: Stenger, Watzke & Ring

(56) Entgegenhaltungen:
- EP-A- 0 246 070
- US-A- 2 871 142

## Beschreibung

Die vorliegende Erfindung betrifft ein Verfahren sowie eine Vorrichtung zur Einstellung der Ionenkonzentration eines abzuscheidenden Metalls in einem Elektrolyten zur Abscheidung von Metallen auf Substraten.

Die galvanotechnische Abscheidung von Metallen auf Substraten unterschiedlichster Materialien ist in der Technik weit verbreitet und findet Anwendung auf unterschiedlichsten Gebieten wie z. B. in der Leiterplattenherstellung, der Automobilindustrie, der Armaturindustrie usw. Die abgeschiedenen Metallschichten verändern die Oberflächeneigenschaften der beschichteten Substrate in optischer oder technischer Hinsicht.

Zur Abscheidung von Metallen sind im Bereich der galvanotechnischen Oberflächenveredelung elektrolytische und außenstromlose Metallabscheidungsverfahren bekannt. Mit Hilfe dieser Verfahren in unterschiedlichster Ausgestaltungsform lassen sich eine Vielzahl von Metall abscheiden.

Grundsätzlich wird hierzu in beiden Verfahren das zu beschichtende Substrat mit einer das abzuscheidende Metall in gelöster Form enthaltenen Lösung in Kontakt gebracht. Im Fall der elektrolytischen Beschichtungsverfahren erfolgt die Metallabscheidung durch Anlegen eines elektrischen Stroms zwischen einer Elektrode und dem zu beschichtenden Substrat als Gegenelektrode und der daraus resultierenden elektrochemischen Reaktion auf der Substratoberfläche. Im Fall der außenstromlosen Beschichtung erfolgt die Metallabscheidung durch Zusatz eines Reduktionsmittels autokatalytisch auf der Substratoberfläche.

In beiden Fällen verändert sich im Laufe des Abscheidungsprozesses die Zusammensetzung des verwendeten Elektrolyten. Insbesondere die Konzentration der Ionen des abzuscheidenden Metalls verringert sich sukzessive im Laufe des Verfahrens, so daß zur Gewährleistung eines gleichbleibenden Beschichtungsergebnisses die ionenkonzentration des abzuscheidenden Metalls durch Zugabe des Metalls zum Elektrolyten nachgeregelt werden muß.

Da das Metall im Elektrolyten zur Metallabscheidung in ionischer Form vorliegen muß, erfolgt die Zugabe des Metalls in Form geeigneter, im Elektrolyten löslicher und entsprechende Metallionen freisetzender Verbindungen der abzuscheidenden Metalle.

In der Regel erfolgt die Zugabe der Metalle deshalb in Form ihrer Sulfate, Nitrate, Phosphate, Halogenide, Carbonate, Hydrogencarbonate, Citrate, Tatrate, Maleate, Acetate, Oxalate oder anderer Carbonsäuresalze oder Hydroxycarbonsäuresalze.

Durch Zusatz der Metalle in dieser Form erhöht sich zwangsläufig die Konzentration der entsprechenden Anionen im Elektrolyten, so daß es irgendwann zur Übersättigung des Elektrolyten mit diesen Anionen kommt und der Elektrolyt verworfen oder regeneriert werden muß.

Ein Maß für die sinnvolle Nutzungsdauer des Elektrolyten ist der Metal-Turn-Over" MTO. Hierbei entspricht ein MTO dem vollständigen Umsatz des im Elektrolyten ursprünglich enthaltenen Metallgehaltes.

Durch die in Folge des Metallzusatzes steigende Konzentration der Anionen verändern sich die Abscheideergebnisse, so daß in Abhängigkeit des Verfahrens der maximale MTO eines nicht regenerierten Elektrolyten bei zwei bis 5 MTO liegt. Ein Überschreiten dieser Grenze führt zu nicht mehr akzeptablen Abscheideergebnissen.

Aus dem Stand der Technik sind unterschiedlichste Verfahren zur Pflege von Elektrolyten bekannt.

So offenbart z. B. die Druckschrift DE 198 51 180 ein Verfahren zum Regenerieren einer Prozeßlösung bei der chemisch-reduktiven Abscheidung von Metallschichten mittels einer Elektrodialysezelle. Hierbei werden die im Elektrolyten befindlichen, durch die chemisch-reduktive Metallabscheidung entstandenen Orthophosphit-Ionen entfernt.

Patentschrift US 2,726,968 offenbart ein Verfahren zur Kontrolle und Pflege von Elektrolyten zur chemisch-reduktiven Nickelabscheidung. Hierbei werden die entstandenen Phosphitionen mittels eines Anionenaustauschers gegen Hypophosphit-Ionen ausgetauscht.

Druckschrift DE 43 10 366 offenbart ein Verfahren und eine Vorrichtung zur Regenerierung von wäßrigen, außenstromlos arbeitenden Beschichtungsbädem zur Metallbeschichtung mittels Metallionen und eines Reduktionsmittel, wobei eine Kombination eines Ionenaustauschers-Prozesses mit den Elektrodenreaktionen der Elektrolyse vorgeschlagen wird. Hierbei werden sowohl zum Orthophosphit umgesetztes Hypophosphit als auch unverbrauchtes Hypophosphit über entsprechende Anionentauschermembranen in einer Elektrodialysezelle dem Elektrolyten entnommen und das Orthophosphit im Kathodenraum mittels Reduktion regeneriert. Anschließend werden regeneriertes und unverbrauchtes Hypophosphit dem Beschichtungsbad wieder zugeführt.

Die aus dem Stand der Technik bekannten Verfahren zur Elektrolytpflege beschäftigen sich weitestgehend mit der Kontrolle der Anionenkonzentration im Elektrolyten.

Aus dem Stand der Technik ist es bekannt, daß die Anionenkonzentration einen Einfluß auf die maximalen MTOs eines Elektrolyten besitzt. Das Ergänzen des verbrauchten bzw. abgeschiedenen Metalls in Form von löslichen Verbindungen wie z. B. Salzen führt zu einer Erhöhung der Anionenkonzentration im Elektrolyten und begrenzt somit die Nutzungsdauer.

Es ist daher die **Aufgabe** der vorliegenden Erfindung ein Verfahren sowie eine Vorrichtung zur Einstellung der lonenkonzentration des abzuscheidenden Metalls in einem Elektrolyten zur Abscheidung von Metallen auf Substraten anzugeben, mit welchen die Einstellung der Ionenkonzentration des abzuscheidenden Metalls ohne Beeinflussung der Anionenkonzentration im Elektrolyten erfolgen kann.

G e l ö s t wird diese Aufgabe hinsichtlich des Verfahrens durch ein Verfahren zur Einstellung der Ionenkonzentration eines abzuscheidenden Metalls in einem Elektrolyten zur Abscheidung von Metallen auf Substraten, welches dadurch gekennzeichnet ist, daß der Elektrolyt mittels einer Donnan-Dialyse über eine Kationenaustauschermembran oder eine mikroporöse Membran mit Ionen des abzuscheidenden Metalls angereichert und um im Elektrolyten befindliche, von den Ionen des abzuscheidenden Metalls verschiedenen Kationen abgereichert wird, mit der Maßgabe, daß ein Ladungsausgleich stattfindet und die Elektroneutralität des Elektrolyten gewahrt bleibt.

Ein solches Verfahren ist insbesondere zur Einstellung der lonenkonzentration in Elektrolyten zur Abscheidung von Metallen wie Kupfer, Nickel, Cobalt, Silber, Gold, Platin oder Palladium geeignet.

Die von den abzuscheidenden Metallionen verschiedenen Kationen, um welche der Elektrolyt abgereichert werden kann sind insbesondere Ionen der Elemente Wasserstoff, Lithium, Natrium, Kalium, Magnesium, Stronthium, Barium oder Ammoniumionen.

Erfindungsgemäß wird der zu behandelnde Elektrolyt über eine Kationenaustauschermembran oder mikroporöse Membran mit einer Austauschflüssigkeit in Kontakt gebracht. Die Austauschflüssigkeit kann hierbei eine wäßrige Lösung oder eine Lösung auf Basis eines geeigneten organischen Lösungsmittels wie z. B. Tributylphosphat, Kronenether oder anderer aus der Flüssig/Flüssig-Extraktion bekannter Extraktionsmittel sein.

Der Austauschflüssigkeit werden die abzuscheidenden Metallionen in Form löslicher Verbindungen zugegeben. Solche Verbindungen können beispielsweise die Sulfate, Nitrate, Phosphate, Halogenide, Carbonate, Hydrogencarbonate, Citrate, Tartrate, Maleate, Acetate, Oxalate oder andere Carbonsäuresalze oder Hydroxycarbonsäuresalze der entsprechenden abzuscheidenden Metalle sein.

Elektrolyt und Austauschflüssigkeit strömen entlang der Kationenaustauschermembran oder mikroporösen Membran. Vorteilhafterweise erfolgt dieses im Gegenstromprinzip.

Hierbei wandern die Kationen des auszutauschenden Metalls aus der Austauschflüssigkeit durch die Kationenaustauschermembran oder mikroporöse Membran in den Elektrolyten. Zur Wahrung der Elektroneutralität wandern im Gegenzug von den Ionen des abzuscheidenden Metalls verschiedene Kationen aus dem Elektrolyten in die Austauschflüssigkeit. Triebkraft dieses Austausches ist der Konzentrationsunterschied der einzelnen lonenarten in der Austauschflüssigkeit und dem Elektrolyten sowie die lonenaktivität bzw. der Unterschied im Donnan-Potential. Bei der Verwendung einer mikroporösen Membran kann eine Vermischung der auf beiden Seiten der Membran befindlichen Flüssigkeiten dadurch verhindert werden, daß auf beiden Seiten identische Flüssigkeitsdrücke eingestellt werden. Dies geschieht vorteilhafterweise mittels verstellbarer Pumpen.

Die Konzentration der Ionen des abzuscheidenden Metalls in der Austauschflüssigkeit möglichst hoch zu wählen, während die Konzentration der Ionen, um welche der Elektrolyt abgereichert werden soll, in der Austauschflüssigkeit möglichst gering zu wählen ist.

Zur Unterstützung des Vorgangs können erfindungsgemäß ionenselektive Kationenaustauschermembranen oder mikroporöse Membranen eingesetzt werden. Hierbei entspricht die Valenz der Membranen der Valenz der auszutauschenden Metallionen. Die eingesetzten Membranen können grundsätzlich Flachmembranen und/oder Hohlfasermembranen sein.

Zur weiteren Steigerung des Austauschprozesses kann die Austauschflüssigkeit Komplexbildner für die aus dem Elektrolyten abzureichernden Ionen enthalten.

Die Austauschflüssigkeit an sich kann nach der Aufnahme der von den Ionen der abzuscheidenden Metallen verschiedene Kationen mittels geeigneter physikalischer oder chemischer Methoden regeneriert werden.

Das erfindungsgemäße Verfahren kann mit bekannten Verfahren zur Einstellung der Anionenkonzentration oder -Zusammensetzung des Elektrolyten parallel oder seriell eingesetzt werden.

Insbesondere eignet sich das erfindungsgemäße Verfahren zur Einstellung der Ionenkonzentration des abzuscheidenden Metalls in Elektrolyten zur außenstromlosen Abscheidung von Metallen auf Substraten.

Das erfindungsgemäße Verfahren kann vorteilhafterweise während des Abscheidebetriebes kontinuierlich durchgeführt werden, wozu zumindest ein Teilstrom des Elektrolyten dem Beschichtungsbad entnommen und erfindungsgemäß behandelt wird.

Hinsichtlich der Vorrichtung wird die Aufgabe der Erfindung durch eine Vorrichtung gelöst, welche einen Elektrolytraum (1) einen Austauschflüssigkeitsraum (2), einen Elektrolytzulauf (5), einen Austauschflüssigkeitszulauf (6), einen Elektrolytablauf (7) und einen Austauschflüssigkeitsablauf (8) aufweist, welche dadurch gekennzeichnet ist, daß der Elektrolytraum (1) und der Austauschflüssigkeitsraum (2) durch eine Kationenaustauschermembran oder mikroporöse Membran (3) voneinander separiert sind.

Vorteilhafterweise ist die Kationenaustauschermembran oder mikroporöse Membran (3) als ionenselektive Membran ausgeführt.

Die Kationenaustauschermembran oder mikroporöse Membran (3) wird durch eine geeignete Membranform wie z. B. eine Flachmembran oder eine Hohlfasermembran oder eine Kombination dieser gebildet.

In einer vorteilhaften Ausführungsform der Vorrichtung weist diese im Elektrolytraum und im Austauschflüssigkeitsraum sich gegenüberliegende mäanderförmige Strömungskanäle (4) auf, durch welche die Strömung des Elektrolyten und der Austauschflüssigkeit beeinflußt werden kann, mit der Maßgabe, daß bei möglichst kleiner Bauform der Vorrichtung und hoher Strömungsgeschwindigkeit eine maximale Kontaktzeit erreicht wird.

In einer weiteren Ausführungsform der erfindungsgemäßen Vorrichtung befinden sich Elektrolytzulauf und Austauschflüssigkeitszulauf auf in Längsausdehnung einander gegenüberliegenden Seiten der Vorrichtung.

In einer weiteren Ausführungsform kann die erfindungsgemäße Vorrichtung in Form eines Moduls aufgebaut werden. Zwei oder mehr solcher Module lassen sich strömungstechnisch so miteinander verbinden, daß der Elektrolytauslauf des ersten Moduls mit dem Elektrolytzulauf des zweiten Moduls verbunden ist, so daß das erste und zweite Modul hinsichtlich des Elektrolytstroms seriell betrieben werden.

Vorteilhafterweise werden hierbei die Austauschflüssigkeitströme nicht seriell, sondern parallel geführt, so daß alle Module mit frischer Austauschflüssigkeit gespeist werden.
- Fig. 1: zeigt sowohl den schematischen Aufbau einer erfindungsgemäßen Vorrichtung als auch das Verfahrensprinzip.
- Fig. 2: zeigt den Aufbau einer erfindungsgemäßen Vorrichtung mit mäanderförmigen Strömungskanälen.

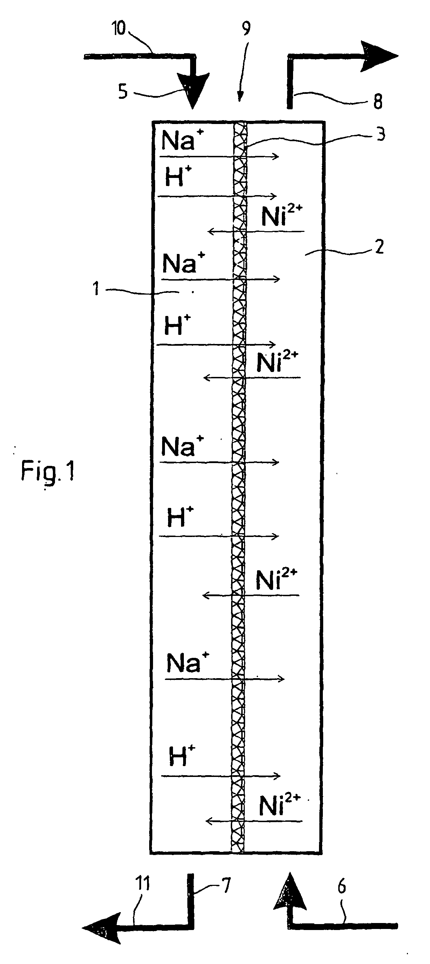

In Fig. 1 strömt aus dem Abscheidebad stammender Elektrolyt 10 in die Austauschvorrichtung 9. Die Austauschvorrichtung 9 besteht aus einem Elektrolytraum 1, einem Austauschflüssigkeitsraum 2 sowie einer Kationenaustauschermembran oder mikroporöse Membran 3. Die Austauschflüssigkeit strömt über den Austauschflüssigkeitszulauf 6 in die Austauschvorrichtung 9, so daß Elektrolytstrom und Austauschflüssigkeitsstrom im Gegenstrom geführt werden. Die in der Austauschflüssigkeit befindlichen Ionen des abzuscheidenden Metalls, hier beispielsweise Ni²⁺, wandern aus der Austauschflüssigkeit durch die Kationenaustauschermembranen oder mikroporöse Membranen 3 in den Elektrolytraum 1 wo sie vom Elektrolyten aufgenommen werden. Im Gegenzug wandern die von den abzuscheidenden Metallionen verschiedenen Ionen, hier beispielsweise Na⁺ und H⁺, aus dem Elektrolyten über die Kationenaustauschermembran oder mikroporöse Membran 3 in den Austauschflüssigkeitsraum 2, wo sie von der Austauschflüssigkeit aufgenommen werden.

Hierdurch ist die Anreicherung des Elektrolyten mit Ionen des abzuscheidenden Metalls kontinuierlich möglich, ohne dem Elektrolyten Anionen zuführen zu müssen.

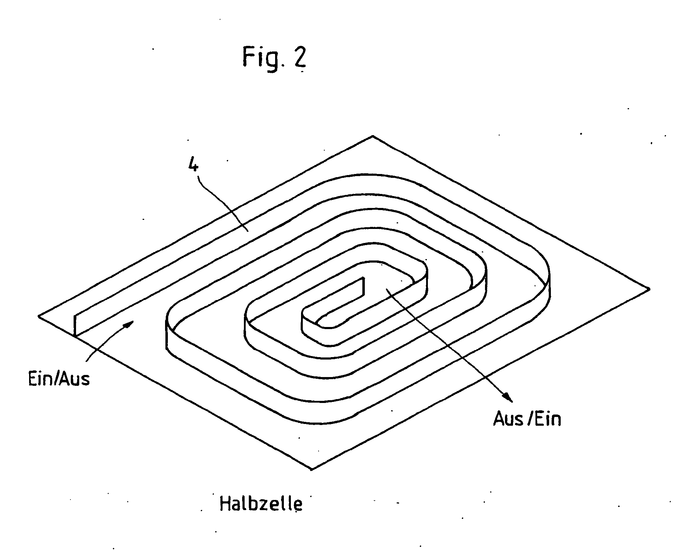

Fig. 2 zeigt eine Ausgestaltungsform der erfindungsgemäßen Vorrichtung mit mäanderförmigen Strömungskanälen 4.

### Bezugszeichenliste:

- 1: Elektrolytstrom
- 2: Austauschflüssigkeitsstrom
- 3: Kationenaustauschermembran
oder mikroporöse Membran
- 4: mäanderförmiger Strömungskanal
- 5: Elektrolytzulauf
- 6: Austauschflüssigkeitszulauf
- 7: Elektrolytablauf
- 8: Austauschflüssigkeitsablauf
- 9: Austauschvorrichtung
- 10: Elektrolytstrom aus dem Abscheidebad
- 11: Elektrolytstrom zum Abscheidebad

## Patentansprüche

1. Verfahren zur Einstellung der lonenkonzentration eines abzuscheidenden Metalls in einem Elektrolyten zur Abscheidung von Metallen auf Substraten,
**dadurch gekennzeichnet,**
**daß** der Elektrolyt mittels einer Donnan-Dialyse über eine Kationenaustauschermembran oder mikroporöse Membran mit Ionen des abzuscheidenden Metalls angereichert und um im Elektrolyten befindliche, von den Ionen des abzuscheidenden Metalls verschiedenen Kationen abgereichert wird, mit der Maßgabe, daß ein Ladungsausgleich stattfindet und die Elektroneutralität des Elektrolyten gewahrt bleibt.

2. Verfahren nach Anspruch 1, **dadurch gekennzeichnet, daß** das abzuscheidende Metall wenigstens ein Metall der Gruppe bestehend aus Kupfer, Nickel, Kobalt, Silber, Gold, Platin oder Palladium ist.

3. Verfahren nach einem der vorherigen Ansprüche, **dadurch gekennzeichnet, daß** die abzureichernden Kationen Ionen wenigstens eines Elements der Gruppe bestehend aus Wasserstoff, Lithium, Natrium, Kalium, Magnesium, Strontium, Barium oder Ammoniumionen sind.

4. Verfahren nach einem der vorherigen Ansprüche, **dadurch gekennzeichnet, daß** sich auf der dem Elektrolyt gegenüberliegenden Seite der Kationenaustauschermembran oder mikroporösen Membran eine Austauschflüssigkeit befindet.

5. Verfahren nach Anspruch 4, **dadurch gekennzeichnet, daß** die Austauschflüssigkeit eine wäßrige Lösung oder eine Lösung auf Basis eines organischen Lösungsmittels ist.

6. Verfahren nach Anspruch 5, **dadurch gekennzeichnet, daß** das abzuscheidende Metall der Austauschflüssigkeit in Form einer Verbindung der Gruppe bestehend aus Sulfat, Nitrat, Phosphat, Halogenid, Carbonat, Hydrogencarbonat, Citrat, Tatrat, Maleat, Acetat oder Oxalat oder anderer Carbonsäuresalze oder Hydroxycarbonsäuresalze zugesetzt wird.

7. Verfahren nach Anspruch 4, **dadurch gekennzeichnet, daß** Elektrolyt und Austauschflüssigkeit an der Kationenaustauschermembran oder mikroporösen Membran entlangstörmen.

8. Verfahren nach Anspruch 7, **dadurch gekennzeichnet, daß** Elektrolyt und Austauschflüssigkeit im Gegenstromprinzip entlang der Kationenaustauschermembran oder mikroporösen Membran geführt werden.

9. Verfahren nach einem der vorherigen Ansprüche, **dadurch gekennzeichnet, daß** als Kationenaustauschermembran oder mikroporöse Membran eine lonen selektive Membran eingesetzt wird.

10. Verfahren nach einem der vorherigen Ansprüche, **dadurch gekennzeichnet, daß** als Membran eine Flachmembran und/oder Hohlfasermembran eingesetzt wird.

11. Verfahren nach einem der Ansprüche 4 bis 10, **dadurch gekennzeichnet, daß** der Austauschflüssigkeit Komplexbildner für die aus dem Elektrolyten abzureichernden Ionen zugesetzt werden.

12. Verfahren nach einem der vorherigen Ansprüche, **dadurch gekennzeichnet, daß** die Austauschflüssigkeit nach Aufnahme der von den Ionen des abzuscheidenden Metalls verschiedenen Kationen mittels geeigneter physikalischer oder chemischer Methoden regeneriert wird.

13. Verfahren nach einem der vorherigen Ansprüche, **dadurch gekennzeichnet, daß** das Verfahren mit bekannten Verfahren zur Einstellung der Anionenkonzentration oder Anionenzusammensetzung des Elektrolyten parallel oder seriell eingesetzt wird.

14. Verfahren nach einem der vorherigen Ansprüche, **dadurch gekennzeichnet, daß** die Abscheidung des Metalls auf dem Substrat außenstromlos erfolgt.

15. Verfahren nach einem der vorherigen Ansprüche, **dadurch gekennzeichnet, daß** das Verfahren kontinuierlich während des Abscheidebetriebs durchgeführt wird und hierzu zumindest ein Teilstrom des Elektrolyten erfindungsgemäß behandelt wird.

16. Vorrichtung zur Durchführung eines Verfahrens nach einem der Ansprüche 1 bis 15, aufweisend einen Elektrolytraum (1), einen Austauschflüssigkeitsraum (2), einen Elektrolytzulauf (5), einen Austauschflüssigkeitszulauf (6), einen Elektrolytablauf (7) und einen Austauschflüssigkeitsablauf (8), **dadurch gekennzeichnet, daß** Elektrolytraum (1) und Austauschflüssigkeitsraum (2) durch eine Kationenaustauschermembran oder mikroporöse Membran (3) voneinander separiert sind.

17. Vorrichtung nach Anspruch 16, **dadurch gekennzeichnet, daß** die Kationenaustauschermembran oder mikroporöse Membran (3) eine ionenselektive Membran ist.

18. Vorrichtung nach einem der Ansprüche 16 und 17, **dadurch gekennzeichnet, daß** die Kationenaustauschermembran oder mikroporöse Membran eine Flachmembran und/oder Hohlfasermembran ist.

19. Vorrichtung nach einem der Ansprüche 16 bis 18, **dadurch gekennzeichnet, daß** die Vorrichtung im Elektrolytraum und Austauschflüssigkeitsraum sich gegenüberliegende mäanderförmige Strömungskanäle (4) aufweist.

20. Vorrichtung nach einem der Ansprüche 16 bis 18, **dadurch gekennzeichnet, daß** sich Elektrolytzulauf und Austauschflüssigkeitszulauf auf in Längsausdehnung einander gegenüberliegenden Seiten der Vorrichtung befinden.

21. Vorrichtung bestehend aus zwei oder mehreren Modulen, wobei die einzelnen Module einer Vorrichtung nach einem der Ansprüche 16 bis 20 entsprechen, **dadurch gekennzeichnet, daß** der Elektrolytauslauf des ersten Moduls mit dem Elektrolytzulauf des zweiten Moduls strömungstechnisch so verbunden ist, daß das erste und zweite Modul hinsichtlich des Elektrolytstroms seriell betrieben werden.

22. Vorrichtung nach Anspruch 21, **dadurch gekennzeichnet, daß** dem ersten und zweiten Modul jeweils frische Austauschflüssigkeit zugeführt wird.

## Claims

1. Method of setting the ionic concentration of a metal to be deposited in an electrolyte for the deposition of metal on substrates, **characterised in that** the electrolyte is enriched with ions of the metal to be deposited by means of a Donnan dialysis across a cation exchanger membrane or microporous membrane and is depleted in cations which are located in the electrolyte and are different from the ions of the metal to be deposited, on condition that a charge equalisation takes place and the electroneutrality of the electrolyte is maintained.

2. Method as claimed in Claim 1, **characterised in that** the metal to be deposited is at least one metal from the group comprising copper, nickel, cobalt, gold, platinum or palladium.

3. Method as claimed in any one of the preceding claims, **characterised in that** the cations to be depleted are ions of at least one element from the group comprising hydrogen, lithium, sodium, potassium, magnesium, strontium, barium or ammonium.

4. Method as claimed in any one of the preceding claims, **characterised in that** an exchange fluid is located on the side of the cation exchanger membrane or microporous membrane opposite the electrolyte.

5. Method as claimed in Claim 4, **characterised in that** the exchange fluid is an aqueous solution or a solution based on an organic solvent.

6. Method as claimed in Claim 5, **characterised in that** the metal to be deposited is added to the exchange fluid in the form of a compound from the group comprising sulphate, nitrate, phosphate, halide, carbonate, hydrocarbonate, citrate, tartrate, maleate, acetate or oxalate or other carboxylic acid salts or hydroxycarboxylic salts.

7. Method as claimed in Claim 4, **characterised in that** electrolyte and exchange fluid flow along on the cation exchanger membrane or microporous membrane.

8. Method as claimed in Claim 7, **characterised in that** electrolyte and exchange fluid are guided along the cation exchanger membrane or microporous membrane using the counterflow principle.

9. Method as claimed in any one of the preceding claims, **characterised in that** an ion-selective membrane is used as cation exchanger membrane or microporous membrane.

10. Method as claimed in any one of the preceding claims, **characterised in that** a flat membrane and/or hollow fibre membrane is used as the membrane.

11. Method as claimed in any one of Claims 4 to 10, **characterised in that** complexing agents for the ions to be depleted from the electrolyte are added to the exchange fluid.

12. Method as claimed in any one of the preceding claims, **characterised in that** after absorption of the cations which are different from the ions of the metal to be deposited the exchange fluid is regenerated by means of suitable physical or chemical methods.

13. Method as claimed in any one of the preceding claims, **characterised in that** the method is used simultaneously with or subsequent to known methods for setting the anion concentration or anion composition of the electrolyte.

14. Method as claimed in any one of the preceding claims, **characterised in that** the deposition of the metal on the substrate takes place free of parasitic current.

15. Method as claimed in any one of the preceding claims, **characterised in that** the method is carried out continuously during the deposition operation and for this purpose at least a part-stream of the electrolyte is treated according to the invention.

16. Apparatus for carrying out a method as claimed in any one of Claims 1 to 15, having an electrolyte chamber (1), an exchange fluid chamber (2), and electrolyte inlet (5), an exchange fluid inlet (6), an electrolyte outlet (7) and an exchange fluid outlet (8), **characterised in that** the electrolyte chamber (1) and the exchange fluid chamber (2) are separated from one another by a cation exchanger membrane or microporous membrane (3).

17. Apparatus as claimed in Claim 16, **characterised in that** the cation exchanger membrane or microporous membrane (3) is an ion-selective membrane.

18. Apparatus as claimed in any one of Claims 16 and 17, **characterised in that** the cation exchanger membrane or microporous membrane is a flat membrane and/or hollow fibre membrane.

19. Apparatus as claimed in any one of Claims 16 to 18, **characterised in that** the apparatus has meandering flow channels (4) which lie opposite one another in the electrolyte chamber and exchange fluid chamber.

20. Apparatus as claimed in any one of Claims 16 to 18, **characterised in that** the electrolyte inlet and exchange fluid inlet are located on opposing sides of the apparatus

21. Apparatus comprising two or more modules, the individual modules corresponding to an apparatus as claimed in any one of Claims 16 to 20, **characterised in that** the electrolyte outlet of the first module is in fluid communication with the electrolyte inlet of the second module in such a way that the first and second module are operated serially with regard to the electrolyte flow.

22. Apparatus as claimed in Claim 21, **characterised in that** fresh exchange fluid is supplied respectively to the first and second module.

## Revendications

1. Procédé pour ajuster la concentration en ions d'un métal à déposer dans un électrolyte pour le dépôt de métaux sur des substrats, **caractérisé en ce que** l'électrolyte est enrichi en ions du métal à déposer au moyen d'une dialyse de Donnan sur une membrane échangeuse de cations ou une membrane microporeuse et appauvri en cations présents dans l'électrolyte qui sont différents des ions du métal à déposer, sous la condition qu'un équilibre de charge s'établisse et que la neutralité électronique de l'électrolyte soit maintenue.

2. Procédé selon la revendication 1, **caractérisé en ce que** le métal à déposer est au moins un métal parmi le groupe comprenant le cuivre, le nickel, le cobalt, l'argent, l'or, le platine ou le palladium.

3. Procédé selon l'une des revendications précédentes, **caractérisé en ce que** les cations à éliminer sont des ions d'au moins un élément appartenant au groupe comprenant l'hydrogène, le lithium, le sodium, le potassium, le magnésium, le strontium, le baryum ou les ions ammonium.

4. Procédé selon l'une des revendications précédentes, **caractérisé en ce qu'**un liquide d'échange est présent sur la face de la membrane échangeuse de cations ou de la membrane microporeuse opposée à l'électrolyte.

5. Procédé selon la revendication 4, **caractérisé en ce que** le liquide d'échange est une solution aqueuse ou une solution à base d'un solvant organique.

6. Procédé selon la revendication 5, **caractérisé en ce que** le métal à déposer est ajouté au liquide d'échange sous la forme d'un composé appartenant au groupe comprenant sulfate, nitrate, phosphate, halogénure, carbonate, hydrogénocarbonate, citrate, tartrate, maléate, acétate ou oxalate ou d'autres sels d'acide carboxylique ou sels d'acide hydroxycarboxylique.

7. Procédé selon la revendication 4, **caractérisé en ce que** l'électrolyte et le liquide d'échange circulent le long de la membrane échangeuse d'ions ou de la membrane microporeuse.

8. Procédé selon la revendication 7, **caractérisé en ce que** l'électrolyte et le liquide d'échange sont guidés selon le principe du contre-courant le long de la membrane échangeuse d'ions ou de la membrane microporeuse.

9. Procédé selon l'une des revendications précédentes, **caractérisé en ce que** la membrane échangeuse d'ions ou la membrane microporeuse utilisée est une membrane à sélectivité ionique.

10. Procédé selon l'une des revendications précédentes, **caractérisé en ce que** la membrane utilisée est une membrane plate et/ou une membrane à fibres creuses.

11. Procédé selon l'une des revendications 4 à 10, **caractérisé en ce que** le liquide d'échange est additionné d'agents complexants pour les ions à éliminer dans l'électrolyte.

12. Procédé selon l'une des revendications précédentes, **caractérisé en ce qu'**après avoir absorbé les cations différents des ions du métal à déposer, le liquide d'échange est régénéré au moyen de méthodes physiques ou chimiques appropriées.

13. Procédé selon l'une des revendications précédentes, **caractérisé en ce que** le procédé est utilisé en parallèle ou en série avec des procédés connus pour l'ajustement de la concentration en anions ou de la composition anionique de l'électrolyte.

14. Procédé selon l'une des revendications précédentes, **caractérisé en ce que** le dépôt du métal sur le substrat s'effectue sans courant extérieur.

15. Procédé selon l'une des revendications précédentes, **caractérisé en ce que** le procédé est exécuté en continu pendant le dépôt et au moins une partie du flux d'électrolyte est traitée pour cela selon la présente invention.

16. Dispositif pour la mise en oeuvre d'un procédé selon l'une des revendications 1 à 15, présentant un compartiment d'électrolyte (1), un compartiment de liquide d'échange (2), une arrivée d'électrolyte (5), une arrivée de liquide d'échange (6), une évacuation de l'électrolyte (7) et une évacuation du liquide d'échange (8), **caractérisé en ce que** le compartiment d'électrolyte (1) et le compartiment de liquide d'échange (2) sont séparés l'un de l'autre par une membrane échangeuse d'ions ou une membrane microporeuse (3).

17. Dispositif selon la revendication 16, **caractérisé en ce que** la membrane échangeuse d'ions et/ou la membrane microporeuse (3) est une membrane à sélectivité ionique.

18. Dispositif selon l'une des revendications 16 et 17, **caractérisé en ce que** la membrane échangeuse d'ions ou la membrane microporeuse est une membrane plate et/ou une membrane à fibres creuses.

19. Procédé selon l'une des revendications 16 à 18, **caractérisé en ce que** le dispositif comporte dans le compartiment d'électrolyte et le compartiment de liquide d'échange des canaux de circulation (4) en méandres se faisant face.

20. Procédé selon l'une des revendications 16 à 18, **caractérisé en ce que** l'arrivée d'électrolyte et l'arrivée de liquide d'échange se trouvent sur des côtés opposés du dispositif dans le sens de l'extension longitudinale.

21. Dispositif composé de deux ou plusieurs modules, dans lequel les différents modules correspondent à un dispositif selon l'une des revendications 16 à 20, **caractérisé en ce que** la sortie d'électrolyte du premier module communique avec l'arrivée d'électrolyte du deuxième module de telle manière que le premier module et le deuxième soient conduits en série en ce qui concerne le flux d'électrolyte.

22. Dispositif selon la revendication 21, **caractérisé en ce que** du liquide d'échange neuf est amené dans le premier module et le deuxième.
